# EUROPEAN PATENT APPLICATION

(11) **EP 1 591 913 A2**
(43) Date of publication of application: **02.11.2005**
(21) Application number: 05103319.9
(22) Date of filing: 25.04.2005
(51) Int. Cl.: G06F 17/24

(54) **Method and system for preparing a document for printing**

(30) Priority: 26.04.2004 EP 04101717
(71) Applicant: AGFA-GEVAERT, 2640 Mortsel (BE)
(72) Inventor: Frings, Peter AGFA-GEVAERT, 7640 Mortsel (BE)

(57) **Abstract**

A method for preparing a multiple-page document for printing on a printing system, and a system therefor, the method including (a) inputting a page description language (PDL) file representing a number of pages of the document including a specific page; (b) converting the page description language (PDL) file to an output file for the printing on the printing system; (c) making an annotation to the specific page, wherein the annotation may be made visible to a user; (d) making a run list determining an order of the number of pages; (e) making a document page association (DPA) to the specific page when the annotation (ann) is made to the specific page, the document page association (DPA) linking the specific page and the annotation (ann); and (f) creating a run list association (RLA) at a run list position in the run list, wherein the run list position corresponds to the specific page and wherein the run list association (RLA) links the run list position and the annotation (ann).

## Description

### FIELD OF THE INVENTION

The present invention relates to a method, and a system therefor, for preparing a multiple-page document for printing on a printing system, wherein pages of the document are converted from page description language (PDL) files to an output file for printing on the printing system, and annotations may be made to a page and be made visible to a user.

### BACKGROUND OF THE INVENTION

Printing engines such as laser printers, plotters, and other printing systems produce an image or "visual representation" on a sheet of paper or the like. A printing engine can print dots on a piece of paper corresponding to the information of a bitmap (or pixelmap where a pixelmap is characterized as having a depth of two or more bits) which forms an input for the printing engine. A bitmap (or bitmap file) forms a digital representation of the visual representation of the page to be printed. A printing system creates a visual representation by printing an array of pixels arranged in rows and columns from the bitmap.

Such a printing engine may be used to produce books, newspapers, pamphlets, posters and other single and multi-page printed matter. The printing press advantageously prints multiple pages of printed matter at the same time onto a single sheet. Besides printing presses other systems used for printing multiple pages at the same time include e.g. image setters and plate setters. A runlist module is used for providing PDL objects in display order with layout.

When printing multiple pages, the individual pages may be arranged in one or more multiple-page sheets. Each sheet includes a layout of pages that may be ordered or otherwise optimised to facilitate post-printing processes. For example, the layout of the sheet may be arranged such that individual pages are in sequence when folding occurs. The multiple-page sheet may hold for instance 4, 8, 16 etc. pages.

The data for the pages are conventionally contained in page description language files (PDL). For that purpose the pages may have been e.g. produced by a Page Layout application such as Quark Express, InDesign etc., the data having been put in a page description language file (PDL). A page description language (PDL) is a high level language for describing objects to be displayed by an output system. Each PDL file may describe one or more pages. Such files form the input for the method of the invention, and the system and apparatus in accordance with the invention. Conversion means that produce a bitmap output file in response to a number of page description language input files are widely used. Such a conversion means has a means (e.g. an interface) for receiving page description data in the form of a number of PDL files. In order to produce a finished sheet, the conversion means interprets the data contained in the PDL files, renders objects within the data into bitmap(s), and after all objects for the sheet are rendered, sends the bitmap file to a printing engine which prints the sheet. The PDL files are representative of the various pages (or sub-pages) of content to be displayed on a given sheet. A PDL file sent to a conversion means specifies objects to be displayed and related information. A PostScript object can, for example, include a pattern of pixels to be displayed, or it can reference an outline curve defining in mathematical terms a shape to be marked. The object may also include other rasterizing information such as font and size.

The layout information describes how the pages are to be arranged to achieve the desired output result. Examples of PDL are PDF and Postscript. The pages are set in a particular order which is determined by a run list, i.e. page 1, 2, 3, 4 etc. In a run list the pages are set in sequence.

The system and method may be arranged in several manners, but for all systems and methods it holds that it is important that the final print of the pages is correct and errors are corrected.

Amongst others to ensure that the final print is correct systems comprise means to view pages before they are printed and means, called an annotator in this document, to make annotations to pages, such as "remove this or that typing error, increase contrast, etc.", in short, remarks that relate to the pages by which one may notice errors on a page or in respect of a page, or suggest improvements. These annotations may relate to a particular part of the page (such as for instance removal of typing errors) or to the page as a whole (such a lay-out, or position in the book). Such improvements, error removal are then to be implemented in or with respect to the page.

It is not uncommon that the person noticing the error or suggesting the improvement does not actually delete the error or make the improvement, but that this is done by another person such as an operator or even by a computer program.

It is of importance that correction of errors, or making of improvements can be easily and accurately monitored and tracked. To this end known systems comprise means for making such annotations visible to a user of the system (a visualizer), prior to converting into an output file. This usually happens by means of displaying the page on a screen and displaying simultaneously the annotations. Such, however, only displays the annotations, it does not have any relation to error correction as such. It is difficult to make a system and method which makes it easily controllable and identifiable whether or not the correct error corrections are made. For instance, it may be possible to make changes visible by comparing the page before and after correction and then showing the differences. However, this shows the differences, not whether or not the intended error corrections have been made. Also the annotations could be changed by the person making the corrections, for instance adding his/her own comments to the already made annotations, e.g. "Corrections are done". That is far from fail safe, once the corrector starts to add comments to the already made comments, it often and easily becomes confusing. It is not always clear who made which comments when and what actions have been taken, and if so, whether they are correct.

In Acrobat™ 6 from Adobe, annotations can be made to a document, and can be made visible to a user; this is disclosed by B. Zipper in: "Acrobat 6: long-awaited features for professional publishers", Seybold Report Analyzing Publishing Techniques, [Online] vol. 3, no. 1, 2003, XP002299455 US ISSN: 1533-9211 Retrieved from the Internet:
URL:http://www.seyboldreports.com/TSR/free/0301/acrobat_6.html [retrieved on 2004-10-05].

### SUMMARY OF THE INVENTION

It is an object of the invention to provide an easy and simple means for a more reliable check of error correction and/or amendments in response to annotations.

The present invention is a method for preparing a document for printing as claimed in independent claim 1. The invention also includes a system for preparing a document for printing as claimed in independent claim 9. Preferred embodiments of the invention are set out in the dependent claims. Preferably, a method in accordance with the invention is implemented by a computer program as claimed in claim 7. The invention also includes a computer readable medium comprising program code adapted to perform such a method, as claimed in claim 8.

A system in accordance with the invention preferably comprises a run list module for making a run list, a document page associator for generating a document page association when an annotation is made to a page, the document page association linking the document page and the annotation, and a run list associator for generating a run list association at a run list position, linking the run list position and the annotation.

In one embodiment, the run list associator is arranged such that a run list association at a run list position is removed when for the document page at the said run list position a new document page association is made.

Preferably the run list associator is arranged for generating a run list association if and when a document page having a document page association is removed from a run list position at the run list.

Preferably the system comprises an indicator to indicate to a user the existence of a run list association when a page is viewed.

In a more preferred embodiment the run list associator is arranged such that, when a document page is copied from a source position of the run list to a target position on the run list, in case the source position has a run list association to an annotation, the run list association of the source position is kept, any existing run list association of the target position is removed and a run list association is created linking the target position and the annotation.

It is further preferred that the run list associator is arranged such that, when a document page is copied from a source position of the run list to a target position on the run list, in case the copied document page has a document page association, a run list association for the source position is generated, any existing run list association of the target position is removed and the document page association is maintained linking the document page and the annotation.

Preferably also one or more of the following measures are implemented:
- an indication of the existence of a run list association is shown together with the page;
- when a document page is copied from a source position of the run list to a target position on the run list, the run list association of the source position is kept, the run list association of the target position is removed and a run list association is created linking the target position and the annotation.

It is important that error corrections (including improvements) are checked. It is difficult to keep track of corrections made. In a preferred method and system in accordance with the invention, two types of associations are used, the first type being the document page associations. A document page association is a link between an annotation and a page within a document. Using such a link any user may find and view the annotation(s) starting from a particular page within a document. In practical cases the document page association comprises e.g. the document name and the page number of the page within the document and often also the position within the page. On the basis of the document page annotations corrections are usually made to the page (typing errors removed, settings changed etc. whatever the content of the comments was). This is often done by somebody else, for instance an operator, or in a different stage than the person or the stage in which the comments were made. To do so, the operator preferably removes the document page from the run list, makes the requested amendments and then usually replaces it at the same position on the run list. Although this will often be the case it is remarked that this should not be considered a restriction on the scope of the invention since the relevant page could be returned at a different position on the run list, as will be explained later with reference to examples, and also, that pages from one document may be swapped with pages from another document etc. Also it is mentioned that an "operator" may "correct" the page. However, this "correction" nor "operator" is to be considered as a restriction, it may be a 'novel version' of the page rather than a corrected version that is replaced, and also it may be someone else than an operator which supplies the "corrected or novel" version. If the annotation is for instance "this page shows a photo of mr X, replace it by a photo of mrs. Y as used yesterday in document XYZ", than the "amendment", is not a correction on the content of the photo but a novel version. The photo of mrs. Y may in fact originate from a different document. In one embodiment of the invention, when the operator removes a page from the run list, a run list association is created when a page is removed, a run list association being a link between an annotation and the relevant run list position. This enables a user using the now established run list association to find, starting from a position on the run list, and subsequently view the original annotation as made to the page comprising the information on the amendment to be made on the original page. In practical cases the run list association comprises e.g. amongst others the run list position, e.g. "position 5". Thus the information relating to the content of the page (i.e. the comments such as "change color setting, remove typing error etc.) is linked via the run list association to the position in the run list. After having made the correct changes the operator transfers the page back to the run list. The person who has suggested the amendments to be made can look at the amended page and review the run list association to check whether or not the correct changes to the page have been made. If the user wishes to make further remarks, a new annotation is made. In a particular embodiment of the invention, when this happens, the run list association is removed, and so basically the starting position is again reached. This enables an easy way of checking whether or not the correct changes have been made. In most circumstances this works satisfactorily.

However, there is still a possibility to make errors or get confused. To eliminate these possibilities, it is preferred to take one or more of the following additional measures.

When a page receives a new document page association, if a run list association exists, the run list association is preferably removed. This ensures that the run list association always comprises the latest version of document associations. So when one checks whether or not the correct amendments have been made, this is restricted to the last set of instructions, i.e. that what the operator was supposed to have corrected. This adds clarity to the checking process.

When pages have to be swapped, for instance page 2 becoming page 1 and vice versa, preferably measures are taken to ensure that the correct swapping of such pages can easily be tracked.

Annotations may be related to the content or lay-out of the page, and for such annotations the above steps (in the method) respectively means (in the system) provide an easy and reliable method and system.

Furthermore, when a page is completely eliminated, e.g. when the run list is shortened, the corresponding run list associations are preferably removed.

It is remarked that the inventors have realized that a similar method may also be used, in which all steps are the same, yet a run list association is already created when a document association is made, which remains when the page is removed, but which is replaced by a new run list association when a new document page association is made.

This constitutes an alternative method and system in accordance with the invention, albeit a less preferred one.

These two embodiments of the invention are the same in that a run list association is made which links the run list position to the same information content as did/does the document page association. Thus, in these two embodiments of the invention, for a specific page to which an annotation is made, the document page association DPA links the concerned page and the annotation ann, and the run link association RLA links the run list position corresponding to the page and the annotation ann. In both methods and systems, the end result would be the same and the mentioned beneficial effects would also be obtained, provided however that the operator indeed removes the page, i.e. does what he is supposed to do.

However, if the run list association is already made when the document association is made, instead of only when the document is removed from its run list position as in the preferred method, it is impossible to tell (at least not from the presence of the run list association) whether or not any action has taken place.

In the preferred embodiment, i.e. in which a run list association is created when a document page having a document page association is removed, it is immediately clear whether an action has been undertaken. If there is no run list association, the document page was not removed, therefore no action has been undertaken. If there is a run list association at least the page has been removed and put back in its position, so some action has been undertaken.

Within the concept of the invention an 'annotator' and 'visualizer' and 'associator' etc. is to be broadly understood and to comprise e.g. any piece of hard-ware (such a associator, visualizer, annotator), any circuit or sub-circuit designed for making an annotation, for visualizing an annotation, for making an association between a run list and an annotation, or between a document page and an annotation etc. as described as well as any piece of soft-ware (computer program or sub program or set of computer programs, or program code(s)) designed or programmed to perform such tasks in accordance with the invention as a whole or a feature of the invention, whether in the form of a method or a system, as well as any combination of pieces of hardware and software acting as such, alone or in combination, without being restricted to the below given exemplary embodiments.

The invention is also embodied in any computer program comprising program code means for performing a method in accordance with the invention when said program is run on a computer as well as in any computer program product comprising program code means stored on a computer readable medium for performing a method in accordance with the invention when said program is run on a computer.

These and other aspects of the invention are apparent from and will be elucidated with reference to the embodiments described hereinafter.

### BRIEF DESCRIPTION OF THE DRAWINGS

In the drawings:
Fig. 1 illustrates schematically a system and method for printing computer generated images.
Fig. 2 illustrates schematically a further example of such a system and method.
Fig. 3 illustrates a part of the system and method as illustrated in figure 1.
Fig. 4 illustrates a number of images or sub-images.

A number of basic steps performed in the system and method in accordance with embodiments of the invention are illustrated in Figures 5A, 5B, 6, 7, 8, 9 and 10.

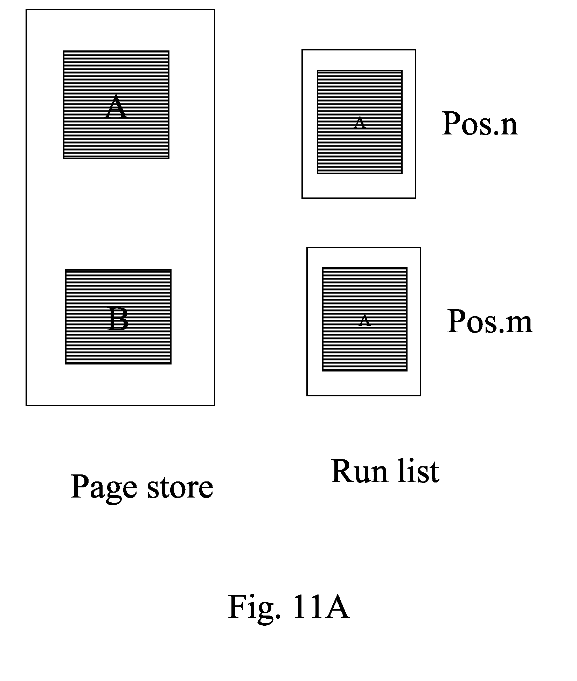

Figs. 11A to 11D illustrate swapping of pages.

The figures are not drawn to scale. Generally, identical components are denoted by the same reference numerals in the figures.

### DETAILED DESCRIPTION OF THE INVENTION

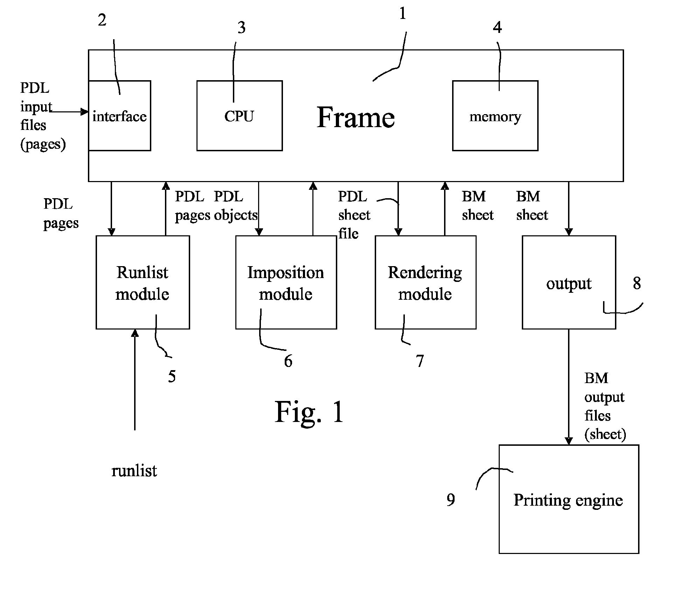

Figure 1 illustrates schematically a system and a method and method for printing computer generated images. "Computer generated images" means within the concept of the invention simply that the input file(s) and the output file are in the form of a digital file. The original images may be photo's, text, articles, pages of a book, pamphlet etc. without being restricted to such examples.

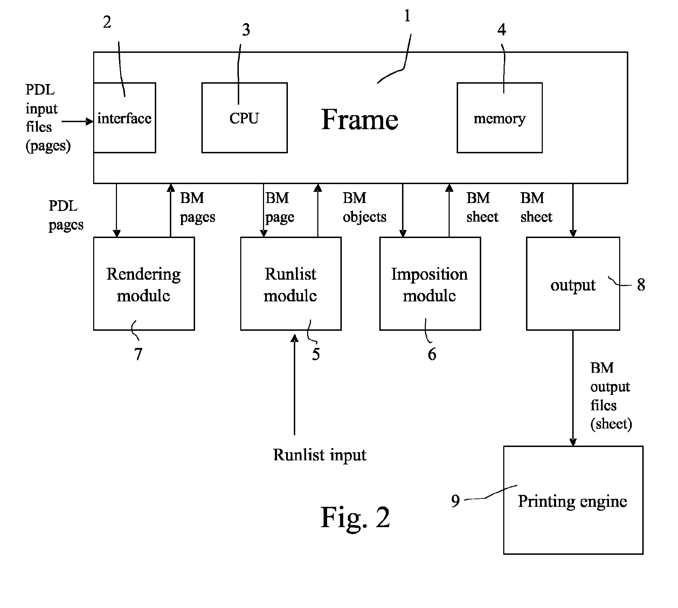

The drawing schematically indicates the flow of data, and several elements of the system, which correspond to the different steps in the method. Figure 1 as well as figure 2 illustrate by means of an example. It is specifically mentioned that the different steps of the methods and systems illustrated in figures 1 and 2, going beyond those described as forming part of the invention, should not be misconstrued to mean restrictions in the scope of protection. A means or module may be any piece of hard- or soft-ware or combination thereof to perform the indicated function, within the flow the flow of data and files. Also, the different modules and method steps are indicated and/or discussed separate from each other for clarity sake, this is not to be restrictively interpreted as signifying that such modules are physically separate elements (although they might be). Often the modules will be in the form of a program codes operated within a computer workstation. Such a computer workstation itself may be a single apparatus, but also form part of a network, or even be distributed in separate locations, for instance when files are sent over an internal network or even over internet between systems or systems.

An input of PDL files for a number of pages is via an interface 42 received by a central frame 1, which comprises a CPU (central processing unit) 3 and a memory 4. A run list is made for the PDL pages in or by runlist module 5, this provides PDL objects in display order with layout, imposition module 6 assembles and impositions the PDL objects into a PDL sheet file and impositions the object on the sheet, creating a PDL sheet file. Rendering module 7 transform the PDL sheet file into a bitmap (BM) sheet. This forms the output of the conversion means. The BM output file(s) are then sent to a printing engine 9 (via output 8) where the sheet or sheets are printed.

Fig. 2 illustrates another example of a system and method. The rendering module is now placed (seen in the flow of data) before the run list module. Rendering is done page per page, independent on the imposition. The two different figures are given by means of example to indicate possible arrangements for or within a system or method.

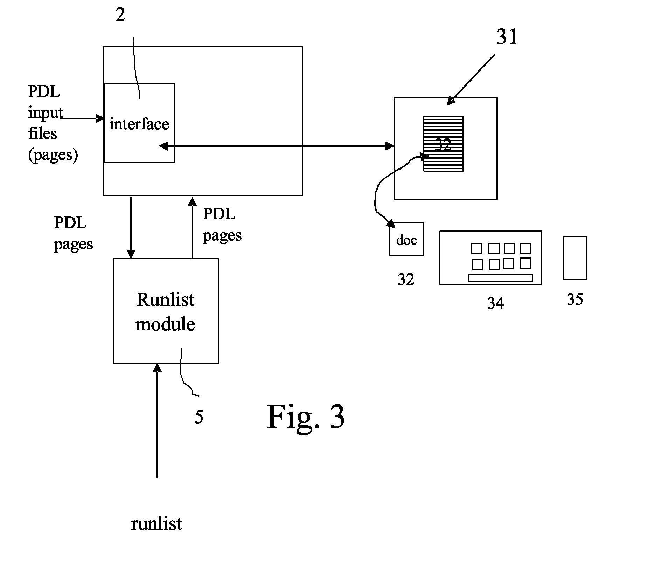

Fig. 3 illustrates a part of the system and method as illustrated in figure 1, namely the part comprising the input and the run list module. The system comprises a communication means 31, comprising a means, such as a display panel to make a page 32 visible to a user. The system comprises means to make an annotation 33 to the page 32. Examples of such means are, at the hardware side, a desk board or a mouse, and computer software to enable annotations to be made.

Making of annotations to a page is very useful especially in the preparation stage before printing. By use of such annotation, it is possible to view a page and make an annotation when an error is spotted or an improvement is seen. The annotations may then be used to improve the pages, or at least such is the intention. The error correction/improvement is often done by a person different from the person making the annotations. If said person correctly effects the required amendment to the page, all is well. However, unfortunately, this is often not the case. A check on the amendments made is very useful. It is of importance that correction of errors, or making of improvements can be easily and accurately monitored and tracked. However, it is difficult to make a system and method which makes it easily controllable and identifiable whether or not the correct error corrections are made. For instance, it may be possible to make changes visible by comparing the page before and after correction and then showing the differences. However, this shows the differences, not whether or not the correct error corrections have been made. Also the annotations could be changed by the person making the corrections, for instance adding his/her own comments to the already made annotations. However, that is far from fail-safe or idiot-proof, once the corrector starts to add comments to the already made comments, it often becomes misleading and easily becomes confusing. It is not always clear who made which comments when and what actions have been taken and. If changes between different versions of the page file are shown it is often unclear, whether one looks at the latest version, and whether the changes shown are the latest, and whether the changes one sees correspond to the changes in accordance with the latest annotations. The present invention aims to provide a relatively simple system and method which provides for an easy and reliable check.

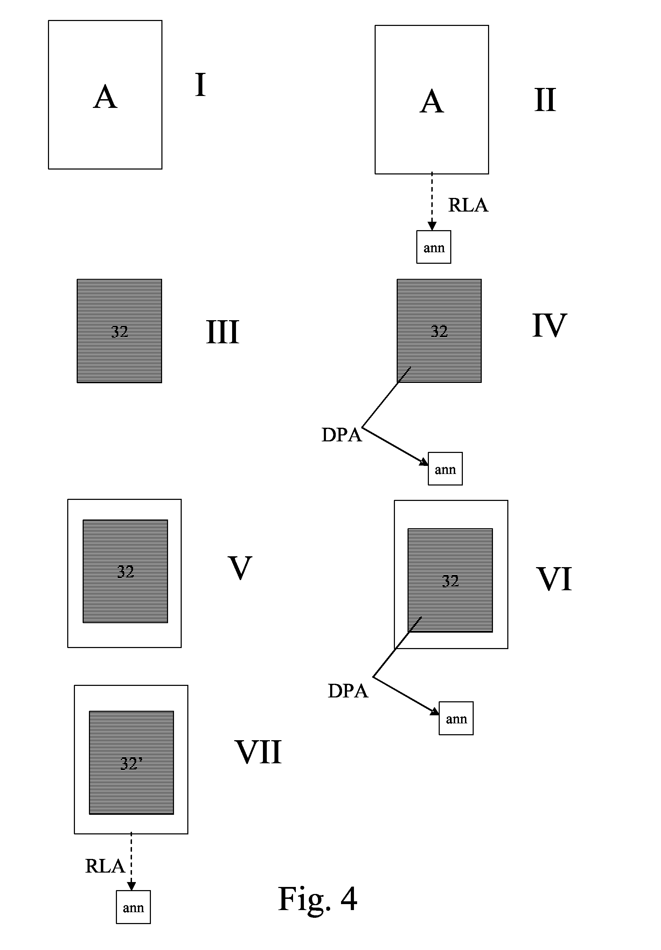

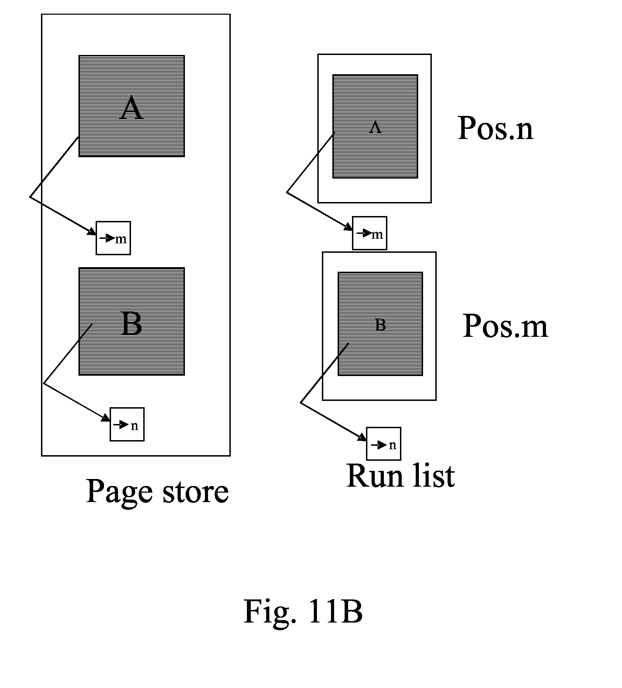

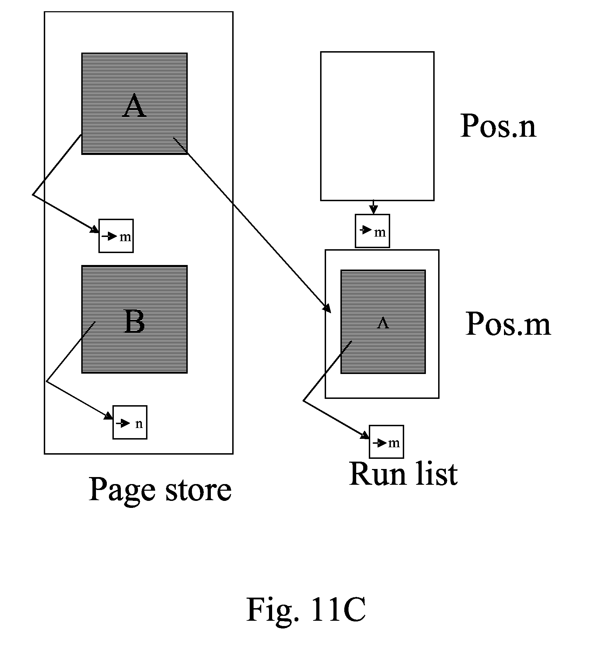

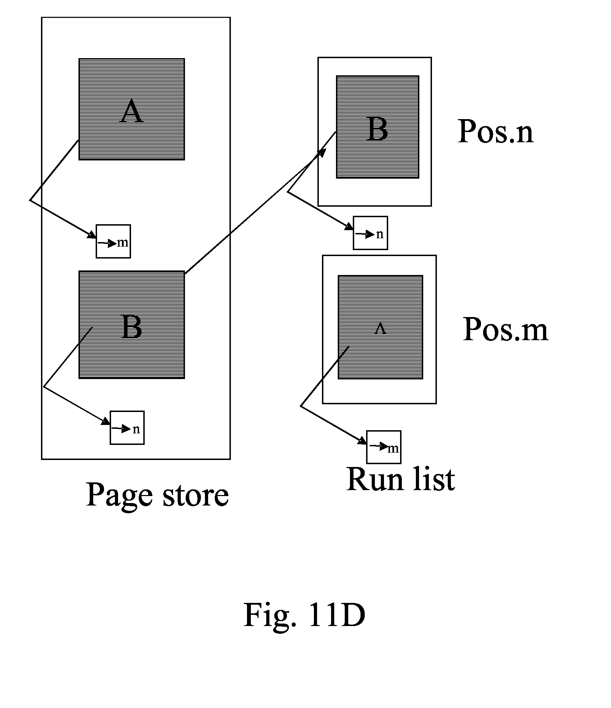

To explain the invention, in the following figures use is made of imagery, and it is useful to start the explanation with an explanation of the imagery. Figure 4 illustrates a number of images or sub-images. An image as shown in I denotes an empty position in the run list, with neither a document page or a run list association. An image as shown in II denotes a run list position, without a document page, but with a run list association RLA. In each of the figures the phrase "position n, m" denotes the nth respectively mth position on the run list. An arrow denotes a change. When at either side of the arrow the same run list position (i.e. at the left and the right side of the arrow position n or position m) is given, all changes take place with one run list position. Such changes may for instance be the generation of an annotation, the removal or placement of a document page or otherwise, and when a change is made in run list position (e.g. a swap of pages) a different run list position (position n and position m) is indicated at either side of the arrow, or in figure 11 below each other.

An image as shown in III denotes a document page. VI denotes a document page with a document page association DPA, linking the document page to an annotation ann. V denotes a run list position, without a run list association, with a document page without a document page association, VI a run list position with a document page with a document page association. The document page association DPA associates (links) the document page to the annotation (in the figures indicated with ann), a run list association associates (links) a run list position with an annotation ann. Thus via these links DPA, RLA a user may find the annotation(s) (ann) to the document page or to the position on the run list respectively. Within a preferred embodiment of the invention document page associations DPA's are, when a page document is removed from a run list position, converted into run list associations RLA's, and novel DPA's replace existing RLA's, and that in such manner that a user can keep an easy track of changes.

Now, a number of basic steps performed in preferred embodiments of the invention are discussed, with reference to figures 5A, 5B, 6 and 7.

A first step is explained in figure 5A. When an annotation is made to a page a document page association DPA is made between the document page and the annotation. In figure 5A the document page association DPA is schematically indicated by the hooked arrow, the content of the annotation by 'ann'. The content may for instance be "change letter type from type A to B".

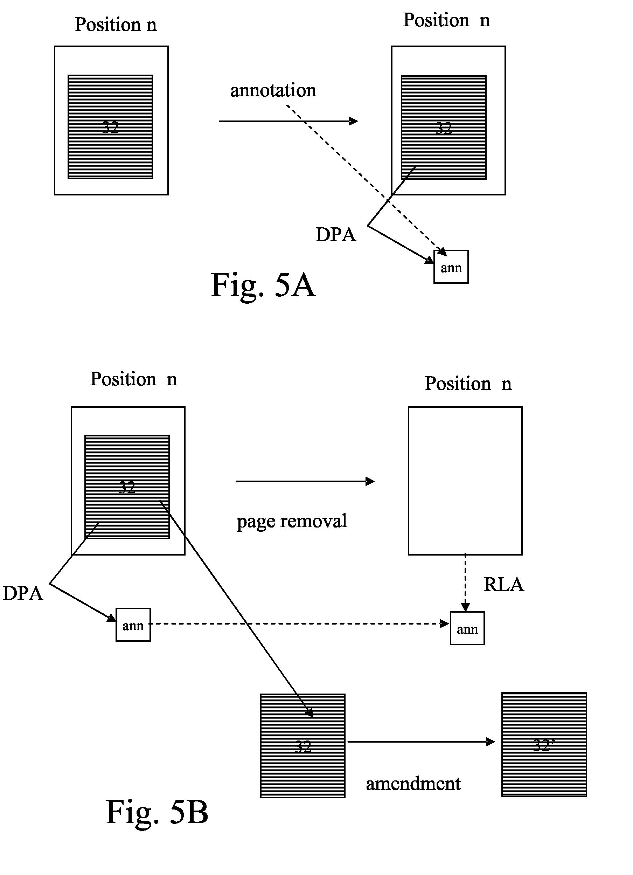

When a page is removed from the run list, a run list association RLA is made establishing a link between the run list position and the annotation, in figure 5B schematically illustrated with the broken arrow between "ann" (left hand side of the figure) and "ann" (right hand side of the figure). Such a removal of a document page happens when an operator takes the document page to be amended in accordance with the content of the annotation. In figure 5B this is schematically illustrated by a change of the document 32, by means of an amendment, to document page 32'. It is to be noted that when the document page is removed, the run list association RLA links the run list position n, on which there is now in fact no page, to information (the annotations ann) which are in practice at this stage superfluous if one only looks at the run list position n and the RLA and the annotations at that stage.

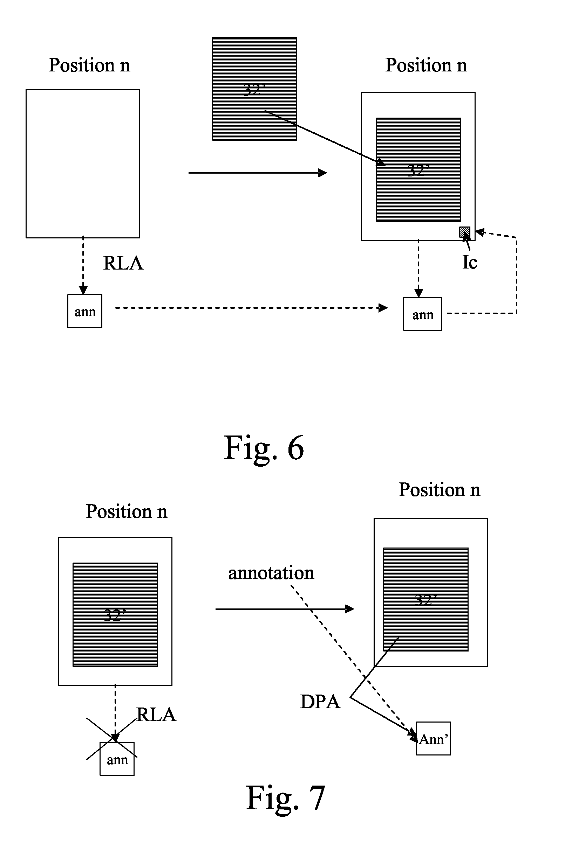

Subsequently the operator in this example changes the letter type from type A to type B. Fig. 6 illustrates placing back of the amended document page 32' at the same position in the run list. The run list position itself was empty (left hand side of the figure) but did have a run list association to the annotations "ann". The amended document page, which does not have a document page association is positioned back on the run list position. The existing run list association is maintained. At the run list position there is now the amended page 32' (wherein the letter type is changed from type A to type B), and a run list association RLA to the annotations 'ann' made in respect of the original unamended page 32, which annotations reads "change letter type from type A to type B".

This relatively simple scheme allows the user to view the page in amended form (32'), and immediately notice that the operator has at least done something. If the operator had not removed the page, there would not be a run list association, since this only happens when a document page with a document page association has been removed, and furthermore the user can, via the run list association view the information to which the run list association refers, since the run list association links the run list position to the original annotations. To simplify the process the system and method in accordance with the invention preferably comprises means, in the system, and a corresponding method step by which, when viewing the page on the display screen, an indication Ic is given that there is a run list association to the present run list position. This could e.g. be an icon on the screen, upon which the user may point the cursor, and click on the icon, whereafter the content of the run list association is made visible on the screen overlaying the document page, in accordance with the original annotations. This allows the user to
- immediately see that there is a run list association (thus at least something is done)
- to immediately compare or overlay the page with the original annotation to check the amendments.
This allows a fast, easy and safe check of the amendments.

Figure 7 illustrates what happens when a new annotation is made: the run list association is removed and a document page association is made, in effect returning to the right hand side of figure 5A, but this time with the new annotations.

The preceding figures until fig. 7 illustrate what happens when a page is amended while remaining at the same run list position. This will often be the case.

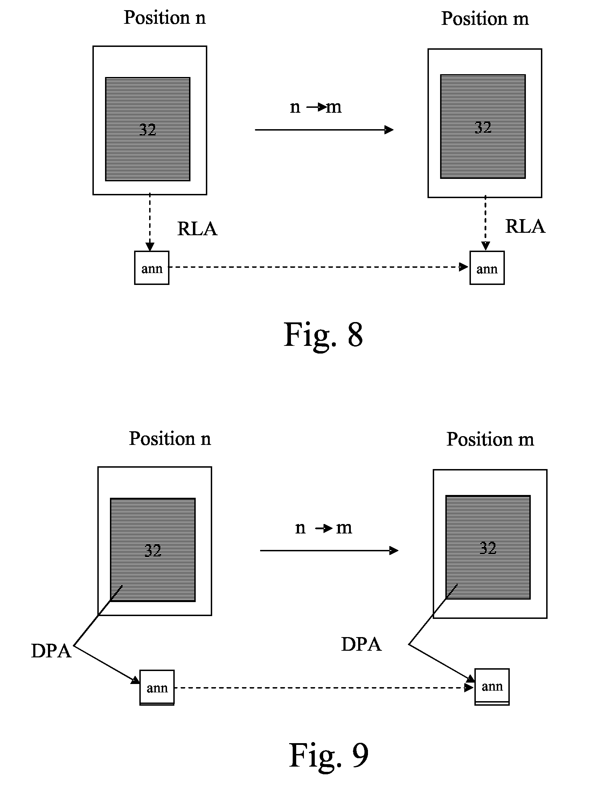

For those circumstances where the amendments to be made comprise a shift or a swap in pages, or more in general copying of document page form one document or one run list position to another additional measures are preferably implemented in a system and method in accordance with the invention. These are illustrated in figs. 8-10.

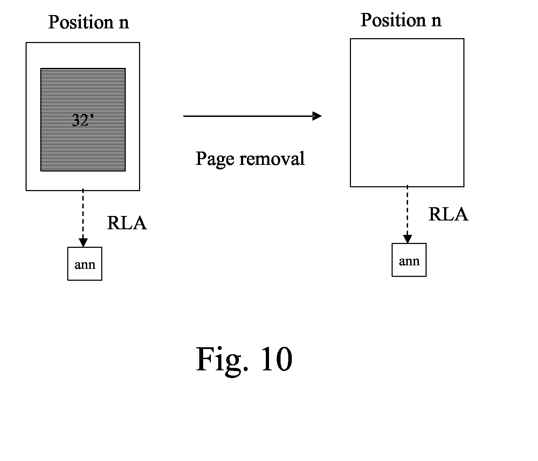

When a page is copied from a source run list (position n) to a target run list position (position m), and the original document page was positioned on a run list position with a run list association, (left hand side of the figure) the run list association of position n is copied to the new run list position, i.e. position m. This situation is schematically illustrated in figure 8. If a document page is copied from position n to position m and the document page had a document page association, the document page association becomes a run list association at the target run list position. This is schematically illustrated in fig. 9. The run list association at the run list source position (position n) is kept or created, because of the rules that if a document page is removed from a run list position with a run list association, the run list association is kept (see also fig 10), and if a document with a document page association is removed a run list association is created (see fig. 5B).

When a page is removed from a run list position having a run list association, the run list association remains (Fig. 10).

For most of the common amendments, which comprise simply amendments in a document page which remains in its position at the run list, the previous figures explain the situation and show the advantages of the invention. It is remarked in relation to the method of the invention, the method can be embodied in a manual manner, i.e. a method in which a page document association is, when a page document is removed from the run list 'translated' into a run list association manually, i.e. by the operator, or automatically, i.e. each time a page document is removed the switch page document association-run list association is done, or in a semi-automatic manner, i.e. when a page document is removed the user is given the choice to create a run list association or not.

A somewhat more complicated situation is explained in the following figures 11A to 11D.

Figure 11A to 11D illustrate swapping of pages.
In the initial situation (Fig. 11A) all pages are placed in the run list, however pages A and B are in the wrong order. Page A is in position 1, whereas it should be in position 2 and vice versa. The operator should swap them. The user finds fault with the position of the pages A and B, and adds remarks to each page, he/she states "this should be page m" on page A (in the figure indicated by the square with →m), and "this should be page n" (→n) on page B. For each of these annotations document pages annotations are established (fig. 11B). The operator then moves page A on position m (Fig. 11C), in accordance with the content of the annotation. A run list association is created for run list position n (in accordance with the scheme as schematically shown in fig. 9), linking the run list position to the annotation. Thereafter the operator places page B on position n. Since the page (page A) being placed has a document page association, the run list association on position n is removed. The annotation on position n now reads "this should be page n" (→n), the annotation on position m now reads "this should be page m" (→m). The correct annotations are now at the correct run list position and the user can easily check that indeed the correct swap of pages has been performed.

The present invention has been described in terms of specific embodiments, which are illustrative of the invention and not to be construed as limiting. The invention may be implemented in hardware, firmware or software, or in a combination of them. Other embodiments are within the scope of the following claims.

## Claims

1. A method for preparing a multiple-page document for printing on a printing system, the method comprising the steps of:
- inputting a page description language (PDL) file representing a number of pages of said document including a specific page;
- converting said page description language (PDL) file to an output file for said printing on said printing system;
- making an annotation to said specific page, wherein said annotation may be made visible to a user;
**characterised in that** the method further comprises the steps of:
- making a run list determining an order of said number of pages;
- making a document page association (DPA) to said specific page when said annotation (ann) is made to said specific page, the document page association (DPA) linking said specific page and said annotation (ann);
- creating a run list association (RLA) at a run list position in said run list, wherein said run list position corresponds to said specific page and wherein the run list association (RLA) links the run list position and the annotation (ann).

2. The method according to claim 1 further comprising the steps of:
- removing said specific page from said run list position;
- creating said run list association (RLA) when said specific page is removed from said run list position.

3. The method according to claim 1 or claim 2 further comprising the steps of:
- making a new document page association (DPA) to said specific page;
- removing said run list association (RLA) when said new document page association (DPA) is made.

4. The method according to claim 1 further comprising the step of creating said run list association (RLA) when said document page association (DPA) to said specific page is made.

5. The method according to claim 4 further comprising the steps of:
- removing said specific page from said run list position;
- keeping said run list association (RLA).

6. The method according to claim 4 or claim 5 further comprising the steps of:
- making a new document page association (DPA) to said specific page, the new document page association (DPA) linking said specific page and a new annotation (ann);
- replacing said run list association (RLA) by a new run list association (RLA) when said new document page association (DPA) is made, said new run list association (RLA) linking said run list position and said new annotation (ann).

7. A computer program comprising computer program code means adapted to perform the steps of the method according to any one of claims 1 to 6 when said program is run on a computer.

8. A computer readable medium comprising program code adapted to carry out the method according to any one of claims 1 to 6 when run on a computer.

9. A system for preparing a multiple-page document for printing on a printing system, the system comprising:
- means for inputting a page description language (PDL) file representing a number of pages of said document including a specific page;
- means for converting said page description language (PDL) file to an output file for said printing on said printing system;
- an annotator for making an annotation to said specific page;
- a visualizer for making said annotation visible to a user;
**characterised in that** the system further comprises:
- a run list module (5) for making a run list determining an order of said number of pages;
- a document page associator for generating a document page association (DPA) to said specific page when said annotation (ann) is made to said specific page, the document page association (DPA) linking said specific page and said annotation (ann);
- a run list associator for creating a run list association (RLA) at a run list position in said run list, wherein said run list position corresponds to said specific page and wherein the run list association (RLA) links the run list position and the annotation (ann).

10. The system according to claim 9 wherein said run list associator is arranged for creating said run list association (RLA) when said specific page is removed from said run list position.

11. The system according to claim 9 or claim 10 wherein said run list associator is arranged for removing said run list association (RLA) when a new document page association (DPA) is generated to said specific page.
